Europäisches Patentamt

European Patent Office

Office européen des brevets

(11) Publication number: **0 104 914**
**B1**

# (12) EUROPEAN PATENT SPECIFICATION

(45) Date of publication of patent specification: **17.12.86**

(21) Application number: **83305701.1**

(22) Date of filing: **23.09.83**

(51) Int. Cl.⁴: **G 11 B 7/00**

(54) Recording and/or reproducing apparatus for discs.

(30) Priority: **24.09.82 JP 144435/82**
**24.09.82 JP 144436/82**

(43) Date of publication of application:
**04.04.84 Bulletin 84/14**

(45) Publication of the grant of the patent:
**17.12.86 Bulletin 86/51**

(84) Designated Contracting States:
**DE FR GB NL**

(56) References cited:
**AT-B- 362 163**
**AT-B- 364 544**
**DE-B-2 330 818**
**US-A-3 980 308**

(73) Proprietor: **SONY CORPORATION**
**7-35 Kitashinagawa 6-Chome Shinagawa-ku**
**Tokyo 141 (JP)**

(72) Inventor: **Higashihara, Teruaki c/o Patent**
**Division**
**Sony Corporation 7-35 Kitashinagawa 6-chome**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to recording and/or reproducing apparatus for discs for audio or the like signals.

More particularly, the invention relates to a movable disc type recording and/or reproducing apparatus in which a disc table rotatably carrying the disc is moved radially of the disc for changing the relative position between the disc and a fixed recording and/or reproducing means including an optical pick-up unit for recording the desired information on predetermined tracks on the disc or for tracing or scanning the recorded tracks on the disc.

In a known recording and/or reproducing apparatus for audio or the like signals, disclosed in EP—A—0004738, the audio signals are recorded on a disc and read out or reproduced therefrom by a laser beam radiated towards the disc from a suitable optical pick-up unit.

Such recording and/or reproducing apparatus is so arranged and constructed that the optical pick-up unit radiating the laser beam towards the rotating disc is moved radially of the disc for sequentially scanning the recording tracks. In this known apparatus, in order to prevent the laser beam from radiating outside during recording or reproduction, a recess for housing the disc on a disc table is covered by a pivotable disc cover. In one scanning arrangement, the optical pick-up unit is mounted fixedly on a chassis and the disc table is moved radially of the disc. In such an arrangement, the disc cover is opened to an obliquely upward position about a hinge provided close to one side of the disc recess. Thus the disc can only be inserted or removed obliquely relative to the disc table. However, when the disc is inserted into the apparatus further than is necessary, the centre spindle of the disc table tends to be out of alignment with the centre opening of the disc, resulting in a complicated disc mounting operation.

It is also required in the recording and/or reproducing apparatus that, when the disc cover is opened for insertion or removal of the disc, the disc is inserted on the disc table and the disc cover is again closed for playback, the disc table is situated at the initial position during cover closure, and a disc presser mounted on the disc cover is correctly registered with the disc table for positively pressing the disc from above.

According to the present invention there is provided a recording and/or reproducing apparatus for a disc, the apparatus comprising:

a cover mounted on a main body of the apparatus so as to be movable between a first open position and a second closed position;

a disc table for rotatably carrying said disc and movable radially of said disc for changing the position of said disc relative to a fixed optical pick-up device and

a disc presser operatively mounted on a holder attached to said cover so as to co-operate with a spindle unit of said disc table to hold said disc; characterised by:

said holder for said disc presser being movably attached to said cover to limit movement of said disc presser radially of said disc; and

control means for controlling said holder to permit said movement of said disc presser radially of said disc when said cover is in said closed position.

The invention will now be described by way of example with reference to the accompanying drawings, in which:

Figure 1 is a diagrammatic perspective view showing an embodiment of recording and/or reproducing apparatus according to the invention with a cover for a disc open;

Figure 2 is a longitudinal sectional view showing a disc chucking means in the apparatus of Figure 1;

Figure 3 is an exploded perspective view showing a disc presser holding means in the apparatus of Figure 1;

Figure 4 is a plan view showing the disc presser holding means;

Figure 5 is a side elevation showing control means permitting radial movement of the disc presser holder means with the cover closed; and

Figure 6 is a side elevation showing the disc plate with the cover closed.

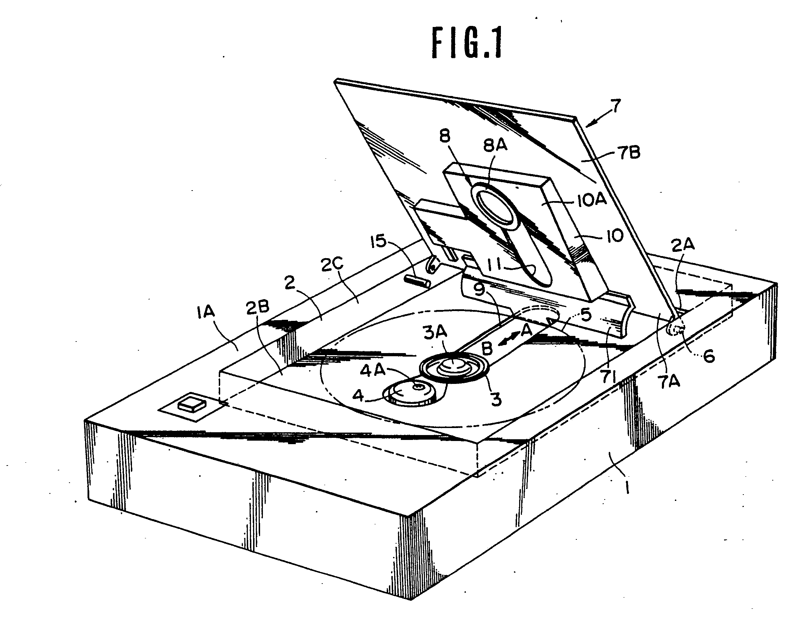

The embodiment of recording and/or reproducing apparatus for a disc and according to the invention will now be described with reference to the accompanying drawings. On an upper portion 1A of a main body 1, there is formed a recess 2 for accommodating a disc 5. An objective lens 4A of an optical pick-up unit 4 and a disc table 3 are mounted in the recess 2, the objective lens 4A facing upwards when seen in Figure 1. The optical pick-up device 4 and the disc table 3 project from an elongated opening or slot 9 in a bottom wall 2B of the main body 1 and the disc table 3 is movable in the slot 9 in the direction shown by arrows A and B by feed means such as a stepping motor, not shown, so that the tracks on the disc 5 carried on the disc table 3 can be confronted by the objective lens 4A as a result of such radial movement of the disc 5.

A pivotable cover 7 for closing the recess 2 has its base portion 7A hinged by a hinge 6 in the vicinity of a side 2A of the recess 2. An approximately L-shaped holder cover 10 formed as a box of smaller depth at the front is mounted on the inner surface 7B of the cover 7. An elongated opening or slot 11 is formed in a lower wall 10A of the holder cover 10, and a presser plate portion 8A of the disc presser 8 is mounted in the slot 11 to project outwardly therefrom and be movable longitudinally of the slot 11.

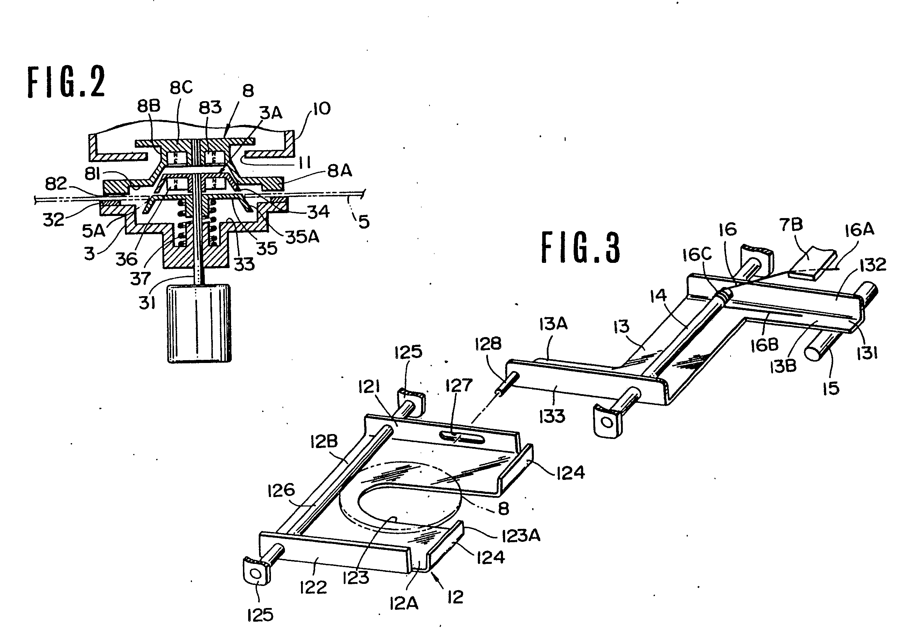

Reference is now made to Figure 2 for describing means for chucking the disc by the disc presser 8 and the disc table 3.

The disc presser 8 has a cylindrical portion 8B, an upper holding ring 8C, and the presser plate portion 8A extending downwardly from the cylindrical portion 8B. The presser plate portion 8A is formed with a downwardly directed central recess 81 and an axially projecting peripheral disc abutment surface 82. A magnet 83 is secured to the bottom of the recess 81. The cylindrical portion 8B has an outside diameter to pass through the slot 11, whereas the ring 8C has a diameter larger than the width of the slot 11 so that the disc presser 8 is held by the holder cover 10.

In the illustrated embodiment, the disc table 3 has its central portion secured to an output shaft 31 of a motor. An annular buffer member 32, such as felt ring, is attached to the upper peripheral surface of the disc table 3, whereas a central recess 33 is formed on the upper surface of the disc table 3. A magnet mounting plate 34 and a disc centring plate 35 making up a centre spindle unit 3A are mounted on the output shaft 31 above the disc table 3. The magnet mounting plate 34 is secured to the end of the output shaft 31 and a magnet 36 facing the magnet 83 of the disc presser 8 is mounted on the magnet mounting plate 34. A disc centring plate 35 has a tapered peripheral portion 35A engaging in a central opening 5A of the disc 5. The centring plate 35 is loosely mounted on the output shaft 31 for movement vertically between the disc table 3 and the magnet mounting plate 34. A spring 37 is interposed between the centring plate 35 and the disc table 3. The magnets 83 and 36 are of opposite polarity and mounted in confronting relation so as to be attracted towards one another. With this disc chucking means, the disc 5 has its centre hole 5A presented to the spindle unit 3A of the disc table 3, whereby the disc 5 placed on the disc centring plate 35 is centred by interfitting of the magnet mounting plate 34 with the tapered peripheral portion 35A of the disc centring plate 35. The cover 7 is then closed, so that the disc presser 8 is pressed from above the disc 5 into engagement with the spindle unit 3A. The magnets 83 and 36 are confronted to one another on respective sides of the disc presser 8, and the disc abutment surface 82 of the disc presser 8 is pressed against the upper surface of the disc 5 by the resulting magnetic attraction, so that the disc centring plate 35 is depressed against the resiliency of the spring 37 until the lower surface of the disc 5 is pressed on the annular buffer member 32 of the disc table 3, and the disc 5 is clamped between the disc abutment surface 82 and the annular buffer member 32 for chucking.

Although not shown, the feed means for the disc table 3 is intended to shift the disc table 3 in the direction shown by the arrows A and B in Figure 1, for linear scanning movement of the optical pick-up unit 4 with respect to the recording tracks of the disc 5, and may typically be formed by a stepping motor and associated disc driving means.

Reference is now made to Figures 1 and 3 to 5 for a description of holding means for the disc presser 8, and control means for permitting movement of the disc presser 8 through closure of the cover 7.

The disc presser 8 is maintained by a holder 12 at a position corresponding to the initial position of the disc table 3 when the cover 7 is opened. It is also positively urged towards the disc table 3 when the cover 7 is closed. The disc presser 8 is designed to be movable relative to the holder 12 when the cover 7 has been closed. The holder 12 is formed as a flat plate having upright folded portions 121 and 122 on respective sides thereof and a central hole 123 extending to an opening 123A on a leading side 12A. On respective sides of the opening 123A, the leading side 12A is respectively formed with a pair of upright bent portions 124, 124. Towards a base side 12B, a supporting shaft 126 carried between supporting members 125, 125 projectedly mounted on the inner surface 7B of the cover 7 is passed through openings in the upright folded portions 121 and 122, and is carried rotatably to permit vertical movement of the leading side of the holder 12. An elongated central hole 127 is formed through the upright folded portion 121 for accommodating a pin 128 as later described.

The hole 123 is of such size as to permit the passage of the cylindrical portion 8B of the disc presser 8 but to obstruct the passage of the ring 8C. The upright bent portions 124, 124 are so arranged and constructed that, when the leading side 12A of the holder 12 is lifted, that is, when the cover 7 is opened, the upright bent portions 124, 124 are engaged with the ring 8C of the disc presser 8 for holding the presser 8 within the hole 123 and, when the leading side 12A is depressed, that is, when the cover 7 is closed, and thus the disc presser 8 interfits with the disc table 3 through magnetic attraction for chucking the disc 5, the upright bent portions 124, 124 are withdrawn to a lower position where they are not engageable with the ring 8C, in a manner so that the ring 8C can be moved outwards from the opening 123A of the hole 123.

A holder arm 13 is pivoted for partial rotation by a pivotable supporting shaft 14 and has the pin 128 at one end 13A, the pin 128 extending horizontally and substantially parallel to the supporting shaft 14 for engaging in the opening 127 in the upright folded portion 121 of the holder 12. The holder arm 13 has an abutting portion 131 at the other end 13B for engaging with a pin 15 fixedly mounted on a side wall 2C of the recess 2. In the embodiment illustrated, the holder arm 13 is crank-shaped in plan view and has upright folded portions 132 and 133 having through-holes for passage of the supporting shaft 14. The pin 128 is mounted to project from the outer surface of the upright folded portion 133.

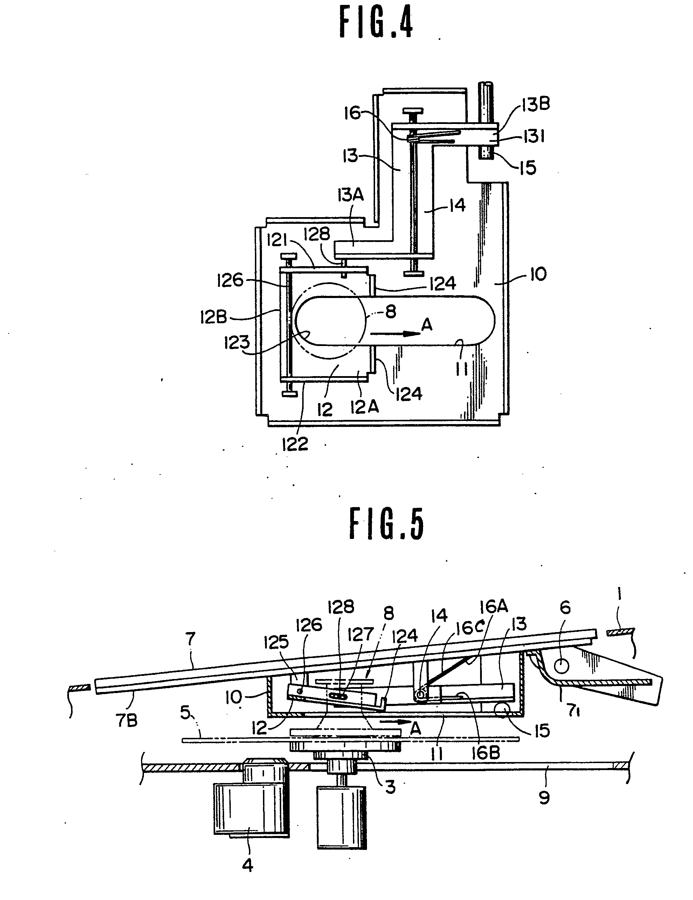

A coil spring 16 has a central part 16C coiled about the supporting shaft 14 and retained at terminal parts 16A and 16B by the inner surface 7B of the cover 7 and by the holder arm 13, respectively, whereby the holder arm 13 is urged to rotate clockwise about the supporting shaft 14 in Figures 3 and 4.

When the cover 7 is opened for insertion, removal or exchange of the disc 5, the disc table 3 has been returned to its initial position by the operation of sensing and driving means which sense the opening of the cover 7 and drive the table shifting means. Thus the disc presser 8 is also returned to the initial position of the disc table 3, that is, to the terminal position indicated by the arrow B in Figure 1, to be engaged and introduced into the hole 123 of the holder 12.

Since the abutting portion 131 of the holder arm 13 is in abutting contact with the fixed pin 15, the holder 12 has its leading side 12A pressed down by the pin 128.

When the cover 7 starts to be rotated about the hinge 6 for opening, the abutting portion 131 of the holder arm 13 is moved away from the fixed pin 15 so that the arm 13 is rotated clockwise in Figures 3 and 5 under the resiliency of the spring 16, so that the pin 128 is lifted for rotating the holder 12. Thus the leading side 12A is lifted until the upright bent portions 124, 124 are engaged with the ring 8C of the disc presser 8 whereby the disc presser 8 is retained in the central hole 123 of the holder 12. When the cover 7 has been opened sufficiently to expose the recess 2, the disc presser 8 is restrained from shifting freely throughout the overall length of the slot 11, but is maintained within a range to permit mating of the disc presser 8 with the spindle unit 3A of the disc table 3 during closure of the cover 7.

When the cover 7 is again rotated about the hinge 6 for closure of the recess 2, after insertion or removal of the disc 5, the disc presser 8 is correctly mated with the centre spindle unit 3A, from above the disc 5 placed on the disc table 3, due to retention of the disc presser 8 by the holder 12, so that the disc 5 may be positively chucked between the disc presser and the disc table 3.

It should be noted that, during closure of the cover 7, the abutting portion 131 of the holder arm 13 is brought into abutting contact with the fixed pin 15 for rotating the shift 14 counter-clockwise in Figures 3 and 5 against the resiliency of the spring 16. Thus the end 13A of the holder arm 13 is lowered so that the holder 12 is rotated clockwise about the supporting shaft 126 on account of the engagement between the pin 128 and the elongated central hole 127. Hence, the leading side 12A of the holder 12 is lowered so that the upright bent portions 124, 124 are withdrawn to a position below the ring 8C of the disc presser 8, and the disc presser 8 is movable freely in the direction of the arrow A in Figures 4 and 5.

Therefore, with the cover 7 thus closed, the apparatus is ready for playback. The disc 8 is rotated upon rotation of the disc table 3 by the spindle motor and the disc presser 8 is also moved in the direction of the arrow A in Figure 1 upon movement of the disc table 3 in that direction with the disc 5 remaining chucked in place between the disc presser 8 and the disc table 3. When the optical pick-up unit 4 is driven in this state, the objective lens 4A of the optical pick-up unit 4 is positioned in a facing relation to the lower side of the disc 5 for radially sequentially scanning the recording tracks on the disc surface starting from the innermost track.

In the neighborhood of the base portion 7A of the inner surface 7B of the cover 7, which is mounted for closing the recess 2 in the main body 1, there is provided a guide plate 71 as means for guiding the disc 5 introduced into the recess 2.

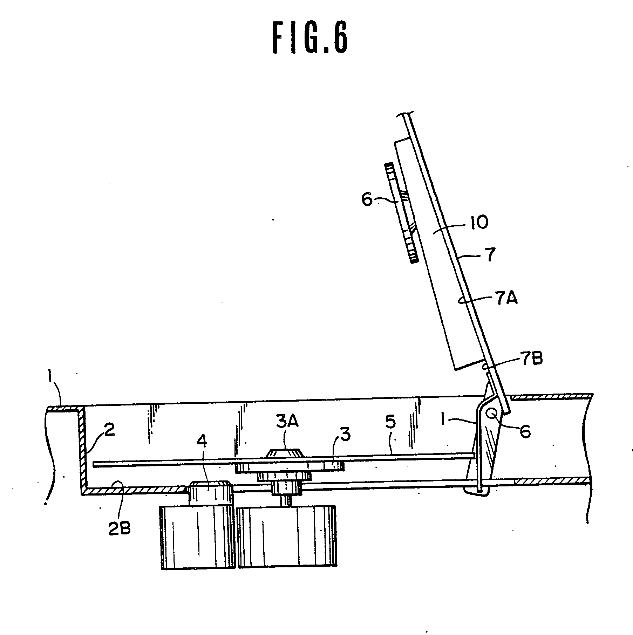

This guide plate 71 is mounted as a movable depending end wall obstructing an excess forward movement of the disc 5 in the recess 2 when the cover 7 is opened, that is, when the cover 7 is obliquely up as shown in Figures 1 and 6. On the other hand, when the cover 7 is closed, the guide plate 71 is moved away from the position acting as said end wall. Thus the guide plate 71 is withdrawn to a position in which a sufficient space is provided ahead of the disc 5 introduced into the recess 2, and thus the movement of the disc 5 and the disc table 3 is not obstructed by the presence of the guide plate 71.

In operation, when introducing a disc 5 on the disc table 3 into the recess 2 or removing the disc 5 from the table 3, the cover 7 is manipulated to the open position. Since the cover 7 extends obliquely upward from one side of the recess 2, it is difficult to insert or remove the disc 5 from a position directly above the disc table 3 which is maintained in the position permitting insertion of the disc 5. Thus the disc 5 needs to be inserted or removed obliquely. When the disc 5 is introduced to the disc table 3 obliquely, a portion of the periphery of the disc 5 abuts on the guide plate 71 then positioned as a depending end wall ahead of the disc 5 thus facilitating the mating of the spindle unit 3A of the disc table 3 with the central opening 5A of the disc 5. Hence the guide plate 71 needs to be provided at a position such that the central hole 5A of the disc 5 is positioned in the vicinity of the spindle unit 3A of the disc table 3 when the disc 5 is introduced into the recess 2, while the cover 7 remains opened abutting on the guide plate 71.

It should be noted that, when the cover 7 is closed for playback after the insertion and loading of the disc 5, the guide plate 71 is withdrawn to an upper position shown in Figure 5 in unison with the pivoting movement of the cover 7 to its closed position. Hence, the guide plate 71 is not a hindrance to the movement of the disc table 3 in the direction of the arrow A.

In the above embodiment, the guide plate 71 is attached directly to the rotary cover 7. Alternatively, the guide plate 71 may be provided as a separate member and may be operatively associated with other movable members of the apparatus so as to be movable upon rotation of the cover 7 between a first position permitting insertion of the disc 5 and a second position withdrawn from and hence not obstructing the radial movement of the disc 5.

**Claims**

1. A recording and/or reproducing apparatus for a disc (5), the apparatus comprising:

a cover (7) mounted on a main body (1) of the apparatus so as to be movable between a first open position and a second closed position;

a disc table (3) for rotatably carrying said disc (5) and movable radially of said disc (5) for changing the position of said disc (5) relative to a fixed optical pick-up device (4); and

a disc presser (8) operatively mounted on a holder (12) attached to said cover (7) so as to co-operate with a spindle unit (3A) of said disc table (3) to hold said disc (5); characterised by:

said holder (12) for said disc presser (8) being movably attached to said cover (7) to limit movement of said disc presser (8) radially of said disc (5); and

control means (13, 15) for controlling said holder (12) to permit said movement of said disc presser (8) raidally of said disc (5) when said cover (7) is in said closed position.

2. Apparatus according to claim 1 wherein said spindle unit (3A) comprises a magnet mounting plate (34) mounted on the end of a shaft (31) which carries said disc table (3), and a second mounting plate (35A) loosely fitted on said shaft (31), said second mounting plate (35A) being vertically movable between said magnet mounting plate (34) and said disc table (3) and biased to be moved upwards by a spring (37), said disc (5) being mounted on said centre spindle unit (3A) by a centre hole (5A) of said disc (5) and chucked between said disc table (3) and said disc presser (8) by said disc presser (8) being attracted towards said spindle unit (3A), said disc presser (8) including a magnet (83) which is attracted downwards towards said disc (5) by a magnet (36) on said magnet mounting plate (34).

3. Apparatus according to claim 1 wherein said disc (5) chucked by said disc table (3) and said disc presser (8) is moved radially with respect to said fixed optical pick-up device (4) by shifting a disc rotating device including said disc table (3) by driving means.

4. Apparatus according to claim 1 wherein said holder (12) has an elongated hole (123, 123A) of a width to permit passage of a cylindrical midportion (8B) of said disc presser (8) and to obstruct the passage of an upper ring (8C) of said disc presser (8), said elongated hole (123, 123A) opening on one side of said holder (12) provided with upright bent portions (124), said holder (12) being pivotally mounted by a supporting shaft (126) mounted on the inner surface of said cover (7) in a manner so that said one side of said holder (12) is movable vertically; and said control means comprises a holder arm (13) pivotally mounted mid-way along said holder (12) by a supporting shaft (14), said holder arm (12) having a pin (128) at one end projecting substantially parallel to said supporting shaft (14) and engaged in an opening (127) in said holder (12), and an abutting portion (131) at the other end in abutment with a fixed pin (15) being part of siad control means mounted in a disc housing recess (2) in said main body (1), said holder arm (13) being biased by a spring (16C) coiled around said supporting shaft (14) of said holder arm (13), said holder (12) being pivoted responsive to the opening or closure of said cover (7) in a manner so that said one side of said holder (12) is moved vertically.

5. Apparatus according to claim 4 wherein said spring (16C) has one end abutting on and engaging with the inner surface of said cover (7) and its other end abutting on and engaging with said holder arm (13) for biasing said holder arm (13) to rotate, said one side of said holder (12) being lowered by said pin (128) of said holder arm (13) when said cover (7) is closed, so that the holding of said disc presser (8) by said bent portions (124) of said one side of said holder (12) is released.

6. Apparatus according to claim 4 wherein said spring (16C) is mounted for biasing said abutting portion (131) of said holder arm (13) away from said fixed pin (15) upon opening said cover (7), and wherein said pin (128) engaging in said opening (127) of said holder (12) is raised and said bent portions (124) of said one side of said holder (12) are raised for holding said disc presser (8) in said elongated hole (123, 123A) in said holder (12).

7. Apparatus according to claim 1 wherein a disc guide (71) is provided and is operable in unison with opening and closure of said cover (7) so that said disc guide (71) is in a first position or in a second position as said cover (7) is open or closed, respectively, said disc guide (71) operates to guide a disc (5) introduced into said disc housing recess (2) only when said disc guide (71) is in said first position.

8. Apparatus according to claim 7 wherein said disc guide (71) is provided to close the base of the inner surface of said cover (7) by forming a movable end wall situated ahead of said disc (5) introduced into said disc housing recess (2) when said cover (7) is open, said disc guide (71) being raised away from the lower surface of said disc housing recess (2) to a position not obstructing the movement of said disc (5) and said disc table (3) when said cover (7) is closed.

**Patentansprüche**

1. Aufzeichnungs- und/oder Wiedergabegerät für eine Platte (5), mit einer Abdeckung (7), die an einem Hauptkörper (1) des Gerätes derart angebracht ist, daß sie zwischen einer ersten offenen Stellung und einer zweiten geschlossenen Stellung bewegbar ist, mit einem Plattenteller (3), der die Platte (5) drehbar trägt und der in radialer Richtung der Platte (5) zur Änderung der Position der betreffenden Platte (5) relativ zu einer feststehenden optischen Abtasteinrichtung (4) bewegbar ist,

und mit einer Plattenandruckeinrichtung (8), die an einem an der Abdeckung (7) derart angebrachten Halter (12) wirksam angebracht ist, daß sie mit einer Spindeleinheit (3A) des Plattentellers (3) zum Zwecke des Festhaltens der Platte (5) zusammenwirkt,

dadurch gekennzeichnet,

daß der Halter (12) für die Plattenandruckeinrichtung (8) an der Abdeckung (7) derart bewegbar angebracht ist, daß die Bewegung der Plattenandruckeinrichtung (8) in radialer Richtung der
betreffenden Platte (5) begrenzt ist,

und daß eine Steuereinrichtung (13, 15) vorgesehen ist, welche den Halter (12) derart steuert,
daß die genannte Bewegung der Plattenandruckeinrichtung (8) in radialer Richtung der Platte (5)
in dem Fall ermöglicht ist, daß die Abdeckung (7)
sich in der geschlossenen Stellung befindet.

2. Gerät nach Anspruch 1, bei dem die Spindeleinheit (3A) eine Magnetbefestigungsplatte (34)
umfaßt, die an dem Ende einer Welle (31) angebracht ist, welche den Plattenteller (3) trägt,

wobei auf der genannten Welle (31) eine zweite
Befestigungsplatte (35A) lose aufgebracht ist, die
zwischen der Magnetbefestigungsplatte (34) und
dem Plattenteller (3) in vertikaler Richtung bewegbar ist und die mittels einer Feder (37) für eine
Aufwärtsbewegung vorgespannt ist,

wobei die Platte (5) mittels eines in ihr enthalte-
nen Mittelloches (5A) auf der Mittel spindeleinheit
(3A) aufgebracht und mittels der zu der Spindel-
einheit (3A) hin angezogenen Plattenandruckein-
richtung (8) zwischen dem Plattenteller (3) und
der Plattenandruckeinrichtung (8) eingespannt ist,

und wobei die Plattenandruckeinrichtung (8)
einen Magneten (83) enthält, der durch einen
Magneten (36) an der Magnetbefestigungsplatte
(34) nach unten zu der Platte (5) hin gezogen ist.

3. Gerät nach Anspruch 1, wobei die durch den
Plattenteller (3) und die Plattenandruckeinrichtung (8) eingespannte Platte (5) radial in bezug auf
die genannte feststehende optische Abtasteinrichtung (4) dadurch bewegt wird, daß eine den
Plattenteller (3) enthaltende Plattendreheinrich-
tung mittels einer Antriebseinrichtung ver-
schoben wird.

4. Gerät nach Anspruch 1, wobei der genannte
Halter (12) ein Längsloch (123, 123A) einer
solchen Breite aufweist, daß der Durchgang eines
zylindrischen Mittelteiles (8B) der Plattenandruckeinrichtung (8) ermöglicht und der Durchgang
eines oberen Ringes (8C) der betreffenden
Plattenandruckeinrichtung (8) gesperrt ist,

wobei das Längsloch (123, 123A), welches auf
einer Seite des genannten Halters (12) hin offen
ist, mit hochkant gebogenen Teilen (124) versehen ist,

wobei der Halter (12) von einer Tragwelle (126)
schwenkbar getragen ist, die an der Innenseite
der Abdeckung (7) in einer solchen Weise angebracht ist, daß die genannte eine Seite des Halters
(12) in vertikaler Richtung bewegbar ist,

wobei die Steuereinrichtung einen Halterarm
(13) enthält, der if der Mitte längs des Halters (12)
von einer Tragwelle (14) schwenkbar getragen ist,
wobei der Halterarm (12) an einem Ende einen
Stift (128), der weigehend parallel zu der
genannten Tragwelle (14) verläuft und der in eine
Öffnung (127) innerhalb des betreffenden Halters
(12) eingreift, und am anderen Ende einen Anlageteil (131) aufweist, der in Anlage mit einem
feststehenden Stift (15) steht, welcher Teil der
betreffenden Steuereinrichtung ist und der in einer Plattengehäuseaufnahme (2) innerhalb des
Hauptkörpers (1) angebracht ist,

wobei der genannte Halterarm (13) mittels einer
Feder (16C) vorgespannt ist, die um die genannte
Tragewelle (14) des Halterarms (13) herumgewickelt ist,

und wobei der Halter (12) auf das Öffnen oder
Schließen der Abdeckung (7) hin in einer solchen
Weise geschwenkt wird, daß die betreffende eine
Seite des Halters (12) in vertikaler Richtung
bewegt wird.

5. Gerät nach Anspruch 4, wobei die genannte
Feder (16C) mit einem Ende an der Innenseite der
Abdeckung (7) anliegt und in diese eingreift und
mit ihrem anderen Ende an dem Halterarm (13)
anliegt und eingreift, um den betreffenden Halterarm (13) für eine Drehung vorzuspannen, wobei
die genannte eine Seite des Halters (12) durch den
Stift (128) des Halterarms (13) abgesenkt wird,
wenn die Abdeckung (7) verschlossen wird, so
daß das Festhalten der Plattenandruckeinrichtung
(8) durch die gebogenen Teile (124) der betreffenden einen Seite des Halters (12) freigegeben ist.

6. Gerät nach Anspruch 4, wobei die genannte
Feder (16C) so angeordnet ist, daß sie den
Anlageteil (131) des Halterarms (13) auf das
Öffnen der Abdeckung (7) hin von dem genannten
feststehenden Stift (15) weg vorspannt,

wobei der in die Öffnung (127) des Halters (12)
eingreifende Stift (128) angehoben wird

und wobei die gebogenen Teile (124) auf der
genannten einen Seite des Halters (12) derart
angehoben werden, daß die Plattenandruckeinrichtung (8) in dem Längsloch (123, 123A) innerhalb des Halters (12) festgehalten ist.

7. Gerät nach Anspruch 1, wobei ein Plattenanschlag (71) vorgesehen und im Gleichgang mit
dem Öffnen und Schliessen der Abdeckung (7)
derart betreibbar ist, daß der betreffende Plattenanschlag (71) sich in einer ersten Position oder in
einer zweiten Position befindet, wenn die
Abdeckung (7) geöffnet bzw. geschlossen ist,

und wobei der betreffende Plattenanschlag (71)
derart wirkt, daß eine in die Plattengehäuseaufnahme (2) eingeführte Platte (5) lediglich dann
geführt wird, wenn der betreffende Plattenanschlag (71) sich in der genannten ersten Position
befindet.

8. Gerät nach Anspruch 7, wobei der Plattenanschlag (71) vorgesehen ist, um den Boden der
Innenseite der Abdeckung (7) dadurch zu verschließen, daß eine bewegbare Stirnwand gebildet ist, die vor der in die genannte Plattengehäuseaufnahme (2) eingesetzten Platte (5)
angeordnet ist, wenn die Abdeckung (7) offen ist,

und wobei der betreffende Plattenanschlag (71)
von der Unterseite der Plattengehäuseaufnahme
(2) in eine die Bewegung der Platte (5) und des
Plattentellers (3) nicht behindernde Position angehoben ist, wenn die Abdeckung (7) geschlossen
ist.

**Revendications**

1. Appareil d'enregistrement et de restitution
d'un disque (5), l'appareil comprenant

un couvercle (7) monté sur un corps (1) de l'appareil afin qu'il soit mobile entre une première position d'ouverture et une seconde position de fermeture,

une platine (3) destinée à supporter le disque (5) afin qu'il puisse tourner et mobile radialement par rapport au disque (5) afin qu'elle modifie la position du disque (5) par rapport à un capteur optique fixe (4), et

un organe (8) de pression monté sur un dispositif de maintien (12) fixé au couvercle (7) afin qu'il coopère avec une broche (3A) de la platine (3) au maintien du disque (5),

caractérisé en ce que

le dispositif de maintien (18) de l'organe de pression (8) est fixé au couvercle (7) d'une manière mobile permettant la limitation du déplacement de l'organe (8) de pression du disque à la direction radiale par rapport au disque (5), et

un dispositif (13, 15) est destiné à commander le dispositif de maintien (12) afin qu'il permette ce déplacement de l'organe de pression (8) radialement par rapport au disque (5) lorsque le couvercle (7) est dans sa position de fermeture.

2. Appareil selon la revendication 1, dans lequel la broche (3A) comporte une plaque (34) de montage d'aimant montée à l'extrémité d'un arbre (31) qui porte la platine (3), et une seconde plaque de montage (35A) montée avec du jeu sur cet arbre (31), la seconde plaque de montage (35A) étant mobile verticalement entre la plaque de montage d'aiment (34) et la platine (3) et étant rappelée par un ressort (37) afin qu'elle se déplace vers le haut, le disque (5) étant monté sur la broche centrale (3A) par un trou central (5A) du disque (5) et étant centré entre la platine (3) et l'organe de pression (8) par attraction de cet organe de pression (8) vers la broche (3A), l'organe de pression (8) comprenant un aimant (83) qui est attiré vers le bas vers le disque (5) par un aimant (36) disposé sur la plaque de montage d'aimant (34).

3. Appareil selon la revendication 1, dans lequel le disque (5) centré par la platine (3) et l'organe de pression (8) est déplacé radialement par rapport au capteur optique fixe (4) par déplacement d'un dispositif d'entraînement en rotation de disque comprenant la platine (3) par un dispositif d'entraînement.

4. Appareil selon la revendication 1, dans lequel le dispositif de maintien (12) a un trou allongé (123, 123A) dont la largeur permet le passage d'une partie cylindrique médiane (8B) de l'organe de pression (8) et empêche le passage d'un anneau supérieur (8C) de l'organe de pression (8), le trou allongé (123, 123A) débouchant d'un premier côté du dispositif de maintien (12) ayant des parties repliées vers le haut (124), le dispositif de maintien (12) étant monté sous forme articulée sur un arbre de support (126) monté à la face interne du couvercle (7) d'une manière telle que ledit côté du dispositif de maintien (12) soit mobile verticalement, et le dispositif de commande comporte un bras (13) du dispositif de maintien, monté sous forme articulée à mi-distance le long du dispositif de maintien (12) autour d'un arbre de support (14), le bras du dispositif de maintien (12) ayant un axe (128) à une première extrémité, cet axe dépassant en direction sensiblement parallèle à l'arbre de support (14) et coopérant avec une ouverture (127) formée dans le dispositif de maintien (12), et une partie de butée (131) formée à l'autre extrémité et placée en butée contre un axe fixe (15) faisant partie du dispositif de commande et monté dans la cavité (1) logeant le disque dans le corps (1), le bras (13) du dispositif de maintien étant rappelé par un ressort (16C) enroulé autour de l'arbre de support (14) du bras (13) du dispositif de maintien, le dispositif de maintien (12) pivotant lors de l'ouverture ou de la fermeture du couvercle (7) d'une manière telle que le premier côté du dispositif de maintien (12) est déplacé verticalement.

5. Appareil selon la revendication 4, dans lequel le ressort (16C) a une première extrémité en butée contre la face interne du couvercle (7) et son autre extrémité est en butée contre le bras (13) du dispositif de maintien afin qu'il rappelle le bras (13) du dispositif de maintien afin qu'il tourne, le premier côté du dispositif de maintien (12) étant abaissé par l'axe (128) du bras (13) du dispositif de maintien lorsque le couvercle (7) est fermé si bien que le maintien de l'organe de pression (8) par les parties repliées (124) du premier côté du dispositif de maintien (12) est supprimé.

6. Appareil selon la revendication 4, dans lequel le ressort (16C) est monté de manière qu'il repousse la partie de butée (131) du bras (13) à distance de l'axe fixe (15) lors de l'ouverture du couvercle (7), et dans lequel l'axe (128) coopérant avec l'ouverture (127) du dispositif de maintien (12) est soulevé et les parties repliées (124) placées du premier côté du dispositif de maintien (12) sont soulevées afin qu'elles maintiennent l'organe de pression (8) dans le trou allongé (123, 123A) formé dans le dispositif de maintien (12).

7. Appareil selon la revendication 1, dans lequel un guide (71) du disque est commandé pendant l'ouverture et la fermeture du couvercle (7) afin que le guide (71) se trouve dans une première position ou dans une seconde position lorsque le couvercle (7) est ouvert ou est fermé respectivement, le guide (71) du disque assurant le guidage d'un disque (5) introduit dans la cavité (2) du boîtier de logement du disque uniquement lorsque le guide (71) est dans sa première position.

8. Appareil selon la revendication 7, dans lequel le guide (71) du disque est destiné à fermer la base de la face interne du couvercle (7) par formation d'une paroi mobile d'extrémité placée en avant du disque (5) introduit dans la cavité (2) du boîtier lorsque le couvercle (7) est ouvert, le guide (71) du disque étant écarté de la face inférieure de la cavité (2) du boîtier de logement du disque vers une position n'empêchant pas le déplacement du disque (5) et de la platine (3) lorsque le couvercle (7) est fermé.

# FIG.1

1

# FIG.2

# FIG.3

0 104 914

# FIG.4

# FIG.5

# FIG.6